# FASCICULE DE BREVET EUROPEEN

(11) **EP 3 237 741 B1**
(45) Date de publication et mention de la délivrance du brevet: **05.02.2020**
(21) Numéro de dépôt: 15823706.5
(22) Date de dépôt: 22.12.2015
(51) Int. Cl.: F02K 1/82, F02C 7/045, F04D 29/66

(54) **PANNEAU D'ATTÉNUATION ACOUSTIQUE POUR NACELLE DE TURBORÉACTEUR**
SCHALLDÄMPFUNGSPLATTE FÜR EINE TURBOSTRAHLTRIEBWERKSGONDEL
ACOUSTIC ATTENUATION PANEL FOR A TURBOJET ENGINE NACELLE

(30) Priorité: 24.12.2014 FR 1463317
(43) Date de publication de la demande: 01.11.2017
(73) Titulaire: Safran Nacelles, 76700 Gonfreville-l'Orcher (FR)
(72) Inventeur: RAMI, Jean-Paul, 76700 Gonfreville l'Orcher (FR); CORFA, Jérôme, 76700 Gonfreville l'Orcher (FR); VERSAEVEL, Marc, 76700 Gonfreville l'Orcher (FR); BREFORT, François, 76700 Gonfreville l'Orcher (FR)
(74) Mandataire: Delorme, Nicolas
(86) Numéro de dépôt international: PCT/FR2015/053730
(87) Numéro de publication internationale: WO 2016/102894

(56) Documents cités:
- EP-A2- 2 292 967
- WO-A1-92/12854
- WO-A2-2011/144842
- FR-A1- 2 214 932

## Description

La présente invention se rapporte au domaine de l'absorption acoustique dans les nacelles de turboréacteurs d'aéronefs.

Les émissions sonores engendrées par les turboréacteurs d'un avion sont particulièrement intenses au moment du décollage, alors que l'avion se trouve en général à proximité de zones habitées.

De nombreuses recherches portant sur la manière de réduire les émissions sonores engendrées par les turboréacteurs d'aéronefs ont été menées ces dernières années.

Ces recherches ont notamment conduit à la mise en place de panneaux d'absorption acoustique dans la nacelle entourant le turboréacteur, en particulier dans les zones où les émissions sonores sont les plus importantes.

Ces panneaux fonctionnent en général selon le principe des résonateurs de Helmholtz, et comprennent à cet effet un ensemble de cavités prises en sandwich entre une peau pleine d'une part, et une peau perforée d'autre part.

La peau perforée est tournée vers la zone d'émission de bruit, de sorte que les ondes acoustiques peuvent pénétrer par les ouvertures de la peau perforée à l'intérieur des cavités. L'énergie acoustique est dissipée par effet visquo-thermique dans les cavités. La hauteur des cavités permet de choisir la bande de fréquence cible.

Outre leur fonction d'atténuation acoustique, ces panneaux assurent deux autres fonctions :
- une fonction aérodynamique : la peau perforée étant en contact avec les flux d'air et de gaz circulant à travers le turboréacteur et la nacelle, la peau perforée canalise le flux et doit perturber le moins possibles ces écoulements ;
- une fonction de reprise d'efforts : par l'intermédiaire du sandwich, le panneau d'atténuation acoustique est à même de prendre certains des efforts subis par la nacelle.

L'un des inconvénients de tels panneaux est qu'ils présentent une forte épaisseur, ce qui rend leur intégration difficile dans des nacelles aux lignes de plus en plus minces.

Cette difficulté se trouve accrue pour les nacelles adaptées à des turboréacteurs à fort taux de dilution, dans lesquelles les fréquences acoustiques à absorber sont plus basses, nécessitant ainsi des panneaux d'absorption encore plus épais. En effet, la plage de fréquences d'atténuation est directement liée à la hauteur des cavités : plus cette hauteur est importante, plus le pic d'atténuation se décale vers les basses fréquences.

L'amélioration des panneaux d'atténuation acoustique vise ainsi à augmenter la longueur des cavités afin d'atténuer efficacement les basses fréquences, sans augmenter l'épaisseur totale du panneau, en diminuant au minimum la surface perforée de la peau acoustique, tout en préservant les propriétés structurales du panneau.

Afin d'augmenter la longueur des cavités acoustiques, il est connu, du document WO 92/12854, de proposer un panneau acoustique comportant une âme alvéolaire dont les cavités sont inclinées par rapport à la direction normale aux peaux du panneau. Cette solution présente toutefois l'inconvénient de réduire fortement la résistance mécanique du panneau, notamment sa résistance à des efforts de compression.

Par ailleurs, il est connu du document WO 2011/034469 une solution consistant à regrouper plusieurs alvéoles communiquant entre elles. Une seule alvéole par groupe communique avec l'extérieur du panneau, de sorte que le chemin parcouru par les ondes sonores est fonction du nombre d'alvéoles communicantes. Cette solution présente cependant l'inconvénient de diminuer le nombre de perforations, ce qui diminue la surface traitée acoustiquement.

La présente invention a pour objectif de pallier les différents inconvénients de l'état de la technique exposés ci-dessus.

Elle concerne à cet effet un panneau d'atténuation acoustique pour une nacelle de turboréacteur, comportant au moins une âme alvéolaire disposée entre au moins une peau interne et une peau externe, l'âme alvéolaire comportant une pluralité d'alvéoles, caractérisé en ce que chaque alvéole définit une cavité de forme générale hélicoïdale s'enroulant le long d'un axe de direction normale aux peaux interne et externe.

Ainsi, en prévoyant des cavités de forme globalement hélicoïdale, on augmente la longueur de ces cavités pour une même épaisseur du panneau. Le traitement acoustique dans les basses fréquences est amélioré sans augmenter l'épaisseur du panneau.

Dans une réalisation, l'âme alvéolaire comporte une pluralité de cellules, chaque cellule incluant une pluralité d'alvéoles, les parois externes des cellules s'étendant selon une direction parallèle à celle de l'axe d'enroulement du profil hélicoïdal des alvéoles. Dans cette configuration, les parois verticales de chaque cellule sont structurantes et assurent la résistance mécanique du panneau, en particulier la résistance aux efforts de compression.

Dans une réalisation, chaque cellule comporte quatre alvéoles.

Dans une réalisation, chaque cellule présente une section carrée.

Dans une réalisation, chaque cellule comporte quatre voiles présentant un profil hélicoïdal s'enroulant autour d'un axe commun de direction normale aux peaux interne et externe, les voiles adjacents délimitant deux à deux, avec les parois externes de la cellule, l'une des alvéoles.

Dans une réalisation, chaque voile forme un hélicoïde s'enroulant autour de l'axe commun, les bords de chaque hélicoïde étant interrompus par les parois externes de la cellule.

Dans une réalisation, le panneau comporte une âme alvéolaire à deux niveaux, l'un au moins des niveaux comportant des cavités de forme cylindrique s'étendant selon une direction normale aux peaux interne et externe.

Dans une réalisation, la peau externe est une peau perforée, dite peau acoustique.

Dans une réalisation, la peau interne est une peau pleine, dite peau support.

L'invention concerne également une nacelle pour turboréacteur d'aéronef, ladite nacelle comprenant au moins un panneau tel que défini ci-dessus.

D'autres caractéristiques et avantages de la présente invention apparaîtront à la lumière de la description qui va suivre, et à l'examen des figures ci-annexées, dans lesquelles :
- la figure 1 est une vue schématique en coupe longitudinale d'une nacelle de l'art antérieur, entourant un turboréacteur d'aéronef ;
- la figure 2 représente un panneau d'atténuation acoustique conventionnel ;
- la figure 3 représente un panneau d'atténuation acoustique conforme à l'invention ;
- les figures 4a à 4d représentent des vues de détail d'un mode de réalisation de cavités acoustiques conformes à l'invention ;

Sur l'ensemble de ces figures, des références identiques ou analogues désignent des organes ou ensembles d'organes identiques ou analogues.

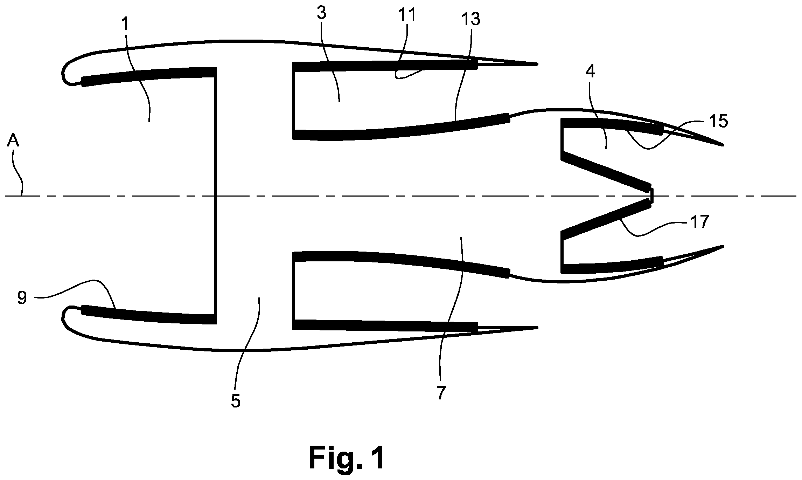

On se reporte à présent à la figure 1, sur laquelle on a représenté une nacelle classique à double flux, définissant une veine d'entrée d'air 1, une veine de flux froid 3 et une veine de flux chaud 4.

Entre la veine d'entrée d'air 1 et la veine de flux froid 3 se trouve une soufflante 5, le turboréacteur 7 étant quant à lui disposé entre la soufflante 5 et la veine de flux chaud 4.

Classiquement, la veine d'entrée d'air 1 est entourée d'une virole d'absorption acoustique 9, formée par l'assemblage de panneaux d'atténuation acoustique.

La veine de flux froid 3 est quant à elle délimitée par des parois radialement externe et interne, également revêtues au moins partiellement de panneaux sandwich d'absorption acoustique 11 et 13 respectivement.

Enfin, la veine de flux chaud 4 est délimitée par une tuyère primaire et un cône d'éjection des gaz, revêtus respectivement et au moins partiellement de panneaux sandwich d'absorption acoustique 15, 17.

Les emplacements des panneaux sandwich d'absorption acoustique 9, 11, 13, 15, 17 correspondent aux parois de la nacelle au niveau desquelles se propage le bruit. La présence de ces panneaux d'atténuation acoustique permet ainsi de diminuer sensiblement le niveau sonore émis par l'ensemble propulsif de l'aéronef, notamment lors du décollage ou de l'atterrissage.

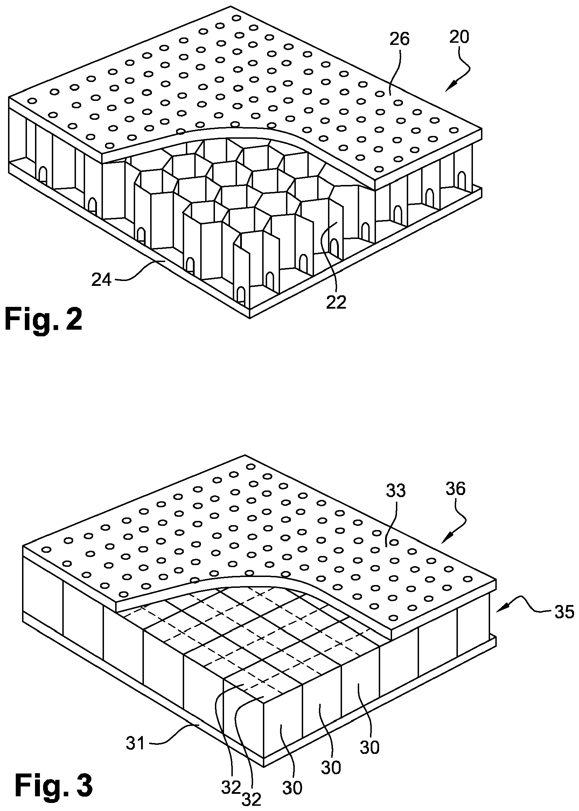

La figure 2 représente un panneau d'atténuation acoustique 20 conventionnel, comportant une âme alvéolaire 22 prise en sandwich entre une peau pleine 24, dite peau support et une peau perforée 26, dite peau acoustique. L'âme alvéolaire comporte une pluralité d'alvéoles, dans l'exemple de section hexagonale (formant ainsi une structure dite en « nid d'abeilles »). Ces alvéoles forment les cavités acoustiques du panneau d'atténuation acoustique 20. L'âme alvéolaire est en général métallique tandis que la peau acoustique 26 et la peau support 24 sont réalisées dans un matériau composite à base de fibres de carbone.

La figure 3 représente un panneau d'atténuation acoustique 36 conforme à l'invention. Ce panneau comporte une peau support 31 pleine et une peau acoustique 33 perforée. Entre la peau support 31 et la peau acoustique 33 est disposée une âme alvéolaire 35. L'âme alvéolaire 35 comprend une pluralité de cellules 30 contigües, chaque cellule 30 incluant une ou plusieurs cavités 32 de forme générale hélicoïdale. Dans l'exemple de la figure 3, chaque cellule 30 inclut quatre cavités 32.

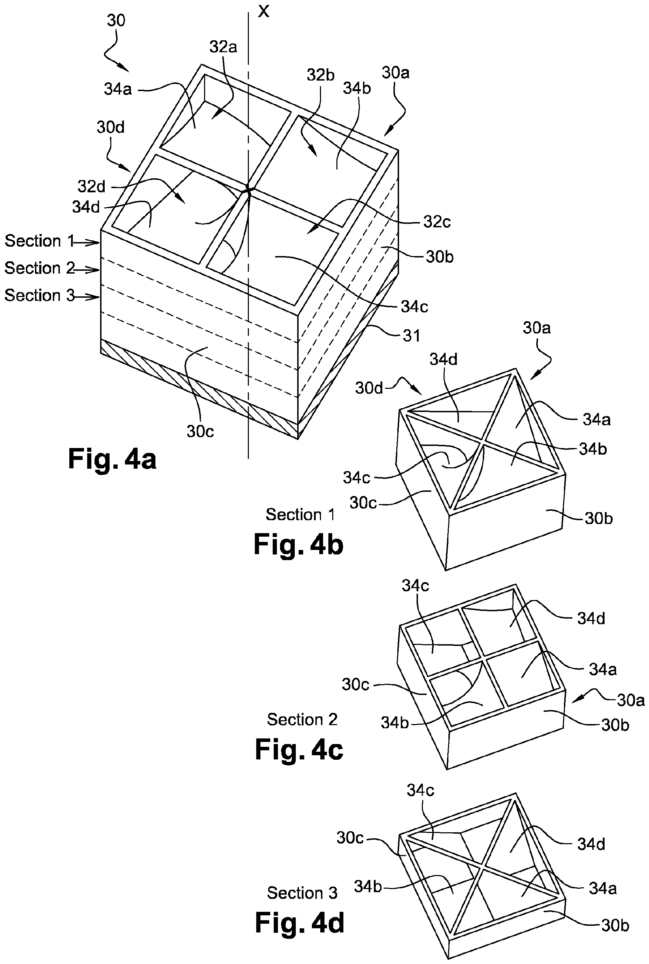

Les figures 4a à 4d montrent un exemple de réalisation d'une cellule 30 conforme à l'invention.

La figure 4a représente une cellule 30 qui regroupe une pluralité d'alvéoles (ou cavités) 32a, 32b, 32c, 32d de forme globalement hélicoïdale. Dans l'exemple représenté, la cellule 30 inclut un groupe de quatre alvéoles, dont le profil hélicoïdal s'enroule autour d'un axe XX commun, de direction normale aux peaux du panneau 36, notamment la peau support 31 (la peau perforée, dite peau acoustique ou peau externe n'est pas représentée sur la figure 4a). Cet axe est confondu avec l'axe de symétrie de la cellule 30, qui présente dans l'exemple une section carrée. Les parois externes 30a, 30b, 30c, 30d de la cellule 30 s'étendent selon une direction parallèle à l'axe XX. Ces parois sont structurantes : elles présentent la résistance mécanique requise pour reprendre les efforts subis par le panneau en fonctionnement normal, notamment les efforts de compression.

Chaque cavité 32a, 32b, 32c, 32d est délimitée par les parois externes 30a, 30b, 30c, 30d de la cellule 30 et par deux de quatre voiles 34a, 34b, 34c, 34d de profil hélicoïdal. Les quatre voiles 34a, 34b, 34c, 34d s'enroulent hélicoïdalement autour de l'axe XX et délimitent ainsi deux à deux les cavités de la cellule 30. Ainsi, la cavité 32a est délimitée par la paroi supérieure du voile 34a et par la paroi inférieure du voile ; la cavité 32b est délimitée par la paroi supérieure du voile 34b et la paroi inférieure du voile 34c, etc. Chacun des voiles 34a, 34b, 34c, 34d forme une rampe hélicoïdale. Chaque voile constitue une portion d'hélicoïde d'axe XX, les bords extérieurs de l'hélicoïde étant tronqués par les parois externes 30a, 30b, 30c, 30d de la cellule 30. L'espace entre deux voiles adjacents forme une des alvéoles de la cellule 30, cet espace étant en outre fermé par les parois externes de la cellule 30.

Les figures 4b, 4c, et 4d représentent différentes sections de la cellule 30, telles qu'indiquées sur la figure 4a.

Conformément à l'invention, chaque cavité 32a, 32b, 32c, 32d présente une forme globalement hélicoïdale s'enroulant autour d'un axe de direction normale aux peaux du panneau d'atténuation acoustique. Cette disposition permet, pour une même épaisseur totale du panneau d'augmenter la hauteur effective des cavités acoustiques. Comme évoqué plus haut, cela permet d'améliorer les capacités d'atténuation dans les basses fréquences.

En regroupant plusieurs cavités acoustiques dans une cellule conservant des parois externes verticales (en considérant que les peaux du panneau s'étendent selon une direction horizontale), on améliore en outre la résistance à la compression du panneau.

Avantageusement, l'âme alvéolaire conforme à l'invention pourra être réalisée par mise en œuvre d'un procédé de fabrication additive.

Par ailleurs, on peut envisager la réalisation d'un panneau d'atténuation acoustique dit à double degré de liberté (également dénommé DDOF pour « double degree of freedom »).Un tel panneau comporte deux âmes alvéolaires séparées par un septum poreux. On pourra notamment combiner une âme alvéolaire conventionnelle, telle que celle représentée à la figure 2, avec une âme alvéolaire conforme à celle de la figure 3.

Bien entendu, la présente invention n'est nullement limitée aux modes de réalisation décrits et représentés. L'étendue de la protection est uniquement définie par les revendications en annexe.

## Revendications

1. Panneau (36) d'atténuation acoustique pour une nacelle de turboréacteur, comportant au moins une âme alvéolaire (35) disposée entre au moins une peau interne (31) et une peau externe (33), l'âme alvéolaire comportant une pluralité d'alvéoles (32), **caractérisé en ce que** chaque alvéole (32) définit une cavité de forme générale hélicoïdale s'enroulant le long d'un axe (XX) de direction normale aux peaux interne et externe.

2. Panneau (36) selon la revendication précédente, dans lequel l'âme alvéolaire (35) comporte une pluralité de cellules (30), chaque cellule (30) incluant une pluralité d'alvéoles (32a, 32b, 32c, 32d), les parois externes (30a, 30b, 30c, 30d) des cellules (30) s'étendant selon une direction parallèle à celle de l'axe (XX) d'enroulement du profil hélicoïdal des alvéoles (32a, 32b, 32c, 32d).

3. Panneau (36) selon la revendication précédente, dans lequel chaque cellule (30) comporte quatre alvéoles (32a, 32b, 32c, 32d).

4. Panneau (36) selon l'une des revendications 2 et 3, dans lequel chaque cellule (30) présente une section carrée.

5. Panneau (36) selon l'une des revendication 3 et 4, dans lequel chaque cellule (30) comporte quatre voiles (34a, 34b, 34c, 34d) présentant un profil hélicoïdal s'enroulant autour d'un axe commun (XX) de direction normale aux peaux interne (31) et externe (33), les voiles adjacents (34a, 34b, 34c, 34d) délimitant deux à deux, avec les parois externes (30a, 30b, 30c, 30d) de la cellule (30), l'une des alvéoles (32a, 32b, 32c, 32d).

6. Panneau (36) selon la revendication précédente, dans lequel chaque voile (34a, 34b, 34c, 34d) forme un hélicoïde s'enroulant autour de l'axe commun (XX), les bords de chaque hélicoïde étant interrompus par les parois externes (30a, 30b, 30c, 30d) de la cellule (30).

7. Panneau (36) selon l'une des revendications précédentes, **caractérisé en ce qu'**il comporte une âme alvéolaire à deux niveaux, l'un au moins des niveaux comportant des cavités de forme cylindrique s'étendant selon une direction normale aux peaux interne (31) et externe (33).

8. Panneau (36) selon l'une des revendications précédentes, **caractérisé en ce que** la peau externe (33) est une peau perforée, dite peau acoustique.

9. Panneau (36) selon l'une des revendications précédentes, **caractérisé en ce que** la peau interne (31) est une peau pleine, dite peau support.

10. Nacelle pour turboréacteur d'aéronef, comprenant au moins un panneau (36) conforme à l'une des revendications précédentes.

## Patentansprüche

1. Schalldämpfungsplatte (36) für eine Turbostrahltriebwerksgondel, die mindestens einen Wabenkern (35) beinhaltet, der zwischen mindestens einer Innenhaut (31) und einer Außenhaut (33) angeordnet ist, wobei der Wabenkern eine Vielzahl von Waben (32) beinhaltet, **dadurch gekennzeichnet, dass** jede Wabe (32) eine Vertiefung in einer im Allgemeinen schraubenförmigen Form definiert, die sich entlang einer Richtungsachse (XX) normal zu der Innen- und Außenhaut aufrollt.

2. Platte (36) nach dem vorstehenden Anspruch, wobei der Wabenkern (35) eine Vielzahl von Zellen (30) beinhaltet, wobei jede Zelle (30) eine Vielzahl von Waben (32a, 32b, 32c, 32d) einschließt, wobei sich die Außenwände (30a, 30b, 30c, 30d) der Zellen (30) in eine Richtung parallel zu jener der Aufrollachse (XX) des schraubenförmigen Profils der Waben (32a, 32b, 32c, 32d) erstrecken.

3. Platte (36) nach dem vorstehenden Anspruch, wobei jede Zelle (30) vier Waben (32a, 32b, 32c, 32d) beinhaltet.

4. Platte (36) nach einem der Ansprüche 2 und 3, wobei jede Zelle (30) einen quadratischen Querschnitt aufweist.

5. Platte (36) nach einem der Ansprüche 3 und 4, wobei jede Zelle (30) vier Hüllen (34a, 34b, 34c, 34d) beinhaltet, die ein schraubenförmiges Profil aufweisen, das sich um eine gemeinsame Richtungsachse (XX) normal zu der Innen- (31) und Außenhaut (33) aufrollt, wobei die angrenzenden Hüllen (34a, 34b, 34c, 34d) paarweise mit den Außenwänden (30a, 30b, 30c, 30d) der Zelle (30) eine der Waben (32a, 32b, 32c, 32d) eingrenzen.

6. Platte (36) nach dem vorstehenden Anspruch, wobei jede Hülle (34a, 34b, 34c, 34d) eine Schraubenlinie bildet, die sich um die gemeinsame Achse (XX) aufrollt, wobei die Ränder jeder Schraubenlinie durch die Außenwände (30a, 30b, 30c, 30d) der Zelle (30) unterbrochen werden.

7. Platte (36) nach einem der vorstehenden Ansprüche, **dadurch gekennzeichnet, dass** sie einen Wabenkern mit zwei Stufen beinhaltet, wobei mindestens eine der Stufen Vertiefungen in zylindrischer Form beinhaltet, die sich in einer Richtung normal zu der Innen- (31) und Außenhaut (33) erstrecken.

8. Platte (36) nach einem der vorstehenden Ansprüche, **dadurch gekennzeichnet, dass** die Außenhaut (33) eine gelochte Haut, akustische Haut genannt, ist.

9. Platte (36) nach einem der vorstehenden Ansprüche, **dadurch gekennzeichnet, dass** die Innenhaut (31) eine volle Haut, Trägerhaut genannt, ist.

10. Turbostrahltriebwerksgondel, umfassend mindestens eine Platte (36) nach einem der vorstehenden Ansprüche.

## Claims

1. An acoustic attenuation panel (36) for a turbojet engine nacelle, including at least one cellular core (35) disposed between at least one inner skin (31) and one outer skin (33), the cellular core including a plurality of cells (32), **characterized in that** each cell (32) defines a cavity with a helical general shape wound along an axis (XX) with a direction normal to the inner and outer skins.

2. The panel (36) according to the preceding claim, wherein the cellular core (35) includes a plurality of chambers (30), each chamber (30) including a plurality of cells (32a, 32b, 32c, 32d), the outer walls (30a, 30b, 30c, 30d) of the chambers (30) extending according to a direction parallel to that of the axis (XX) of winding of the helical profile of the cells (32a, 32b, 32c, 32d).

3. The panel (36) according to the preceding claim, wherein each chamber (30) includes four cells (32a, 32b, 32c, 32d).

4. The panel (36) according to any of claims 2 and 3, wherein each chamber (30) has a square section.

5. The panel (36) according to any of claims 3 and 4, wherein each chamber (30) includes four webs (34a, 34b, 34c, 34d) having a helical profile being wound around a common axis (XX) with a direction normal to the inner (31) and outer (33) skins, the adjacent webs (34a, 34b, 34c, 34d) delimiting in pairs, with the outer walls (30a, 30b, 30c, 30d) of the chamber (30), one of the cells (32a, 32b, 32c, 32d).

6. The panel (36) according to the preceding claim, wherein each web (34a, 34b, 34c, 34d) forms a helicoid winding around the common axis (XX), the edges of each helicoid being interrupted by the outer walls (30a, 30b, 30c, 30d) of the chamber (30).

7. The panel (36) according to any of the preceding claims, **characterized in that** it includes a two-level cellular core, at least one of the levels including cylindrically shaped cavities extending according to a direction normal to the inner (31) and outer (33) skins.

8. The panel (36) according to any of the preceding claims, **characterized in that** the outer skin (33) is a perforated skin, named acoustic skin.

9. The panel (36) according to any of the preceding claims, **characterized in that** the inner skin (31) is a solid skin, named support skin.

10. A nacelle for an aircraft turbojet engine, comprising at least one panel (36) according to any of the preceding claims.
